# EUROPEAN PATENT APPLICATION

(11) **EP 4 664 945 A1**
(43) Date of publication of application: **17.12.2025**
(21) Application number: 25181708.6
(22) Date of filing: 10.06.2025
(51) Int. Cl.: H04W 4/80, H04W 84/20, H04W 76/14, H04W 72/02, H04L 67/01, H04W 88/06, H04L 41/16, H04W 48/18, H04W 36/00, H04W 76/23, H04W 84/12, H04L 12/54

(54) **TECHNIQUES FOR DYNAMIC COMMUNICATION LINK UPGRADES**

(30) Priority: 10.06.2024 US 202463658200 P; 24.02.2025 US 202519061221
(71) Applicant: Apple Inc., Cupertino, CA 95014 (US)
(72) Inventor: GHOSH, Amitabha, Cupertino, CA 95014 (US); SIDDHA, Vividh S., Cupertino, CA 95014 (US); DAHAL, Ankur, Cupertino, CA 95014 (US); CHAVAN, Sushant U., Cupertino, CA 95014 (US); BERGER, Henri S., Cupertino, CA 95014 (US); KITCHENS, Robert K., Cupertino, CA 95014 (US)
(74) Representative: Lang, Johannes

(57) **Abstract**

In some implementations, the techniques may include initiating a transfer of data between a first mobile device and a second mobile device over a first communication pathway. In addition, the techniques may include monitoring, by a system process of the first mobile device, one or more metrics measured of a device state, a network state, a transfer state, or a combination thereof during the transfer of data. The techniques may include generating, by the system process, a change recommendation using the one or more metrics, the change recommendation indicating a change from the first communication pathway to a second communication pathway. Moreover, the techniques may include providing the change recommendation to connection manager. Also, the techniques may include in response to the change recommendation, changing, by the connection manager, the transfer of data from the first communication pathway to the second communication pathway.

## Description

### CROSS-REFERENCES TO OTHER APPLICATIONS

This application claims priority to U.S. Provisional Application No. 63/658,200, for "TECHNIQUES FOR DYNAMIC COMMUNICATION LINK UPGRADES" filed on June 10, 2024, and U.S. Patent Application No. 19/061,221, for "TECHNIQUES FOR DYNAMIC COMMUNICATION LINK UPGRADES" filed on February 24, which are herein incorporated by reference in their entirety for all purposes.

### BACKGROUND

Electronic devices may select a communication pathway for data transfers between the devices. The communication pathway may be selected before the transfer is initiated, and the data may be sent over the pathway regardless of the device and network conditions during the transfer. This can result in slow or energy-inefficient transfers that waste the devices' battery capacity. Accordingly, improvements to communication between electronic devices are desirable.

### SUMMARY

A communication link can be the software and hardware that enable communication between electronic devices. Multiple communication links may be available for communication between a group of devices, and in such situations, a communication link may be selected based on comparing change metrics to one or more change criteria. An electronic device may select low-energy and low-speed communication links for small transfers, but a high-energy and high-speed communication link may be selected for large transfers.

A method for changing communication links can include a transfer of data between a first mobile device and a second mobile device. The transfer of data can be sent over a first communication pathway (e.g., a communication link). A system process of the first mobile device may monitor metrics (e.g., change metrics) that include a device state, a network state, a transfer state, or a combination thereof during the transfer of data. The system process may generate a change recommendation using one or more metrics, and this change recommendation can indicate a change from the first communication pathway to a second communication pathway. This change recommendation can be provided to a connection manager that causes the transfer of data to change from the first communication pathway to the second communication pathway. This method can be implemented in corresponding computer systems, apparatus, and computer programs recorded on one or more non-transitory computer storage devices.

Implementations of the described techniques may include hardware, a method or process, or a computer tangible medium. Other embodiments are directed to systems, portable consumer devices, and non-transitory computer-readable media associated with methods described herein.

A better understanding of the nature and advantages of embodiments of the present disclosure may be gained with reference to the following detailed description and the accompanying drawings.

### BRIEF DESCRIPTION OF THE DRAWINGS

FIG. 1 shows a simplified diagram of a communication link between a primary device and a companion device according to at least one embodiment.
FIG. 2 shows a simplified diagram of an architecture for a communication link between a primary device and a companion device according to at least one embodiment.
FIG. 3 shows a process for performing communication link changes according to at least one embodiment.
FIGs. 4A-4F show simplified diagrams for implementing the techniques of the present disclosure using an application programming interface according to at least one embodiment.
FIG. 5 shows a technique for training a machine learning model according to at least one embodiment.
FIG. 6 shows an example machine learning model of a neural network to at least one embodiment.
FIG. 7 shows a wearable watch device according to at least one embodiment.
FIG. 8 is a simplified block diagram of an example companion or watch device according to at least one embodiment.
FIG. 9 is a block diagram of an example device, which may be a mobile device according to at least one embodiment.

### DETAILED DESCRIPTION

A communication link can be the software and hardware that enable communication between electronic devices. Multiple communication links may be available for communication between a group of devices, and in such situations, a communication link may be selected based on comparing change metrics to one or more change criteria. For example, an electronic device may select low-energy and low-speed communication links for small transfers, but a high-energy and high-speed communication link may be selected for large transfers.

The change metrics can include the state of a communicating device and/or the networking environment. These devices can be energy constrained, and for example, the communication link can be between mobile devices that often rely on battery power. The change criteria for a mobile device may favor a link with a high transfer speed if the device is charging, but a device with a low battery capacity may choose an energy efficient link. The change metrics may vary during a data transfer and the device can change (e.g., upgrade or downgrade) between connection link types in response. For example, a device may change from a low-speed communication link to a high-speed link if the device begins charging and power consumption becomes less of a concern.

The communicating devices may coordinate changes between connection link types using change recommendations. Without coordination, the communicating devices may change to a new link type at different times, and communication between the devices would be interrupted. To coordinate changes, a primary device can provide a change recommendation to a companion device via a connection manager (e.g., a recommendation handler). The primary device can generate a change recommendation using the change criteria and metrics, and the primary device can send the recommendation to the companion device using a connection manager and over the current communication link. The primary device can change to the new communication link and the companion device may change to the new communication link after receiving the recommendation.

### I. COMMUNICATION LINK DIAGRAM

A communication link can be hardware and software that allow a primary device and a companion device to communicate. The primary device may change between communication links in response to the device's state and network conditions. The devices may communicate via a cloud connection in some circumstances.

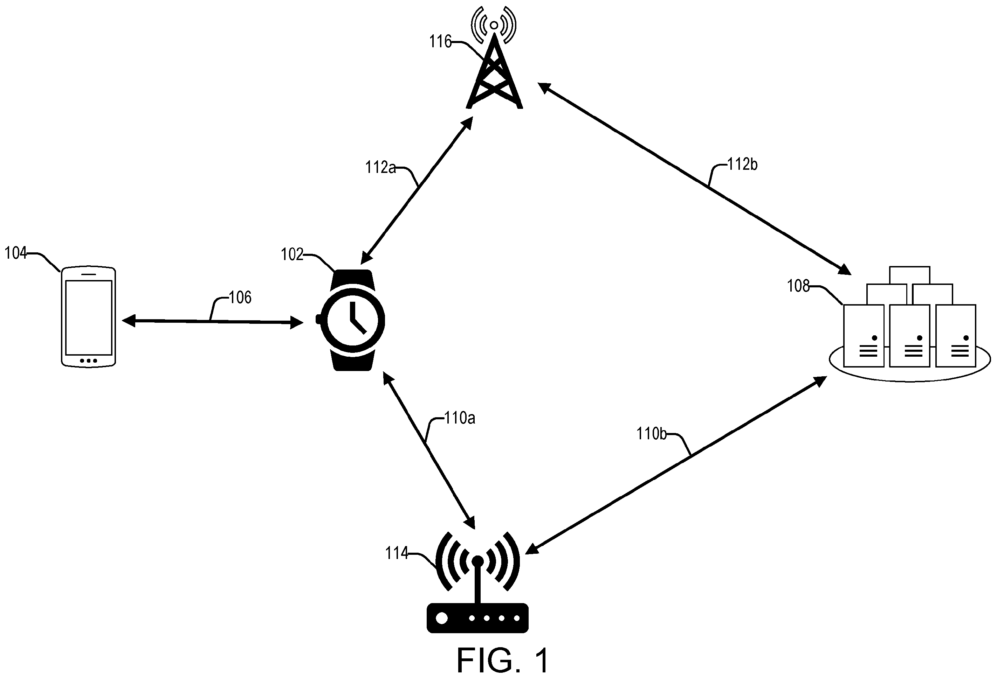

FIG. 1 shows a simplified diagram showing communication links between a primary electronic device and a secondary electronic device according to at least one embodiment. The primary device 102 can be a wearable electronic device such as a smartwatch, and the companion device 104 can be a mobile device such as a smartphone. These devices may communicate to share information between applications or processes. For example, a first health application on the companion device 104 may create visualizations for a user's health data. To generate these visualizations, the first health application may use communication link 106 to retrieve health data from a second health application on the primary device.

### A. Communication Link

The communication link 106 can be a personal area network that allows communication directly between the primary device 102 and the companion device 104. In various embodiments, the communication link 106 may be implemented using Bluetooth low energy (BLE) techniques (e.g., a BLE link), Bluetooth techniques (e.g., a Bluetooth link), and Wi-Fi techniques (e.g., a Wi-Fi link).

### 1. BLE Link

A BLE link can be a communication link 106 that is implemented using BLE technology. The BLE link may cause the primary device 102 and the companion device 104 to consume power at a lower rate than a Bluetooth link or a Wi-Fi link. However, the BLE link may have a lower data transfer rate (e.g., bytes per second) and a higher latency than a Bluetooth link or a Wi-Fi link.

### 2. Bluetooth Link

A Bluetooth link is a communication link 106 that uses Bluetooth technology to communicate data between the primary device 102 and the companion device 104. A Bluetooth link can use the same hardware as a BLE link, but the two links use different communication protocols. Accordingly, switching between a Bluetooth link and a BLE link may not require activating a separate antenna and communication circuitry for a new link. Both Bluetooth and BLE links communicate using radio waves that are sent over channels at a frequency that begins at 2.4 gigahertz (GHz). However, Bluetooth link communications occur using larger packets that are sent over a smaller number of narrower channels (e.g., 1 megahertz (MHz)) when compared to a BLE link (e.g., 2 MHz).

It may be more efficient to use a BLE link for smaller files, but a Bluetooth link may be preferable for larger files or time sensitive applications. Devices implementing a BLE connection enter a power saving mode for at least a portion of the time during communications, and this power saving mode increases latency because the devices need to wake before communication. A BLE link may consume less power per second or per wakeup event, but the Bluetooth link has a higher application throughput (e.g., 0.7-2.1 megabits per second (Mbits/s)) when compared to the BLE link (0.27-1.37 Mbits/s). This throughput difference is in part because the devices implementing a BLE connection are in the low power mode, and not communicating, while the BLE link is active. In addition, this low power mode can mean that a Bluetooth link has a shorter minimum total time to send data (e.g., 0.625 ms) than a BLE link (e.g., 3 ms) because the Bluetooth link devices do not need to wake before communication is initiated.

### 3. Wi-Fi Link

A Wi-Fi link is a communication link 106 that uses Wi-Fi technology for communication between the primary device 102 and the companion device 104. This communication can be direct (e.g. directly between the two devices antennas) or via an access point. The Wi-Fi link can be implemented using radio waves in frequency ranges that begin at 2.4 GHz, 5 GHz, and 6 GHz. These frequency ranges can be different than the ranges used for BLE links or Bluetooth links. Accordingly, switching to a Wi-Fi link can mean that the primary device 102 and the companion device 104 may need to activate a different antenna or hardware in order to transition from a Bluetooth link or BLE link to a Wi-Fi link.

Wi-Fi links operate at high frequency ranges, and these high frequencies can allow for high throughput communication over the link. The high throughput is implemented using communication channels that are considerably wider than the 1-megahertz (MHz) channels for a Bluetooth link or the 2 MHz channels for a BLE link. A Wi-Fi link uses 20 MHz channels in the 2.4 GHz range, 80 MHz channels in the 5 GHz range, and 160 MHz channels in the 6 GHz range. These channels allow for rapid communication over a Wi-Fi link with 100 Mbps throughput at the 2.4 GHz range, 1 gigabit per second (Gbps) at the 5 GHz range, and 2 Gbps at the 6 GHz range. However, the high frequencies can mean that the Wi-Fi link consumes power at a higher rate than either a BLE link or a Bluetooth link.

### B. Cloud Links

The primary device 102 can use cloud links in addition to the communication link 106. A cloud link can be communication pathways with a server 108, and the cloud links can include an access point link 110a-110b and a cellular link 112a-112b. An access point link 110a-110b can be a communication pathway that uses a Wi-Fi access point 114 to route communication between the primary device 102 and the server 108. The cellular link 112a-112b can be a communication pathway that routes communication between the primary device 102 and the server 108 using a cellular tower 116. The primary device 102 can be simultaneously connected to a communication link 106 and a cloud link.

Cloud links may be faster than a communication link 106, but a cloud link may consume more power than the communication links. For particularly large data transfers (e.g., a software update) the primary device 102 may switch from transferring data over a communication link 106 to a cloud link. For example, the primary device 102 and the companion device 104 may access shared images via image sharing applications. The application on the primary device 102 may request images from server 108 which stores data for the photo sharing application. The primary device 102 can determine that the requested files are larger than a threshold, and the primary device 102 may use the cellular link 112a-112b to access the files.

The primary device 102 may change from a cloud link to a communication link 106 if communication over the cloud link is slow. Continuing the example from above, the primary device 102 determines that the cellular link 112a-112b is slow, and the Wi-Fi access point 114 is too far away for communication with the access point link 110a-110b to be viable. In this case, the primary device 102 may change from using the cloud link to accessing the files via the communication link 106 (e.g., the files are accessed from the companion device 104 or the server 108 via the companion device).

The primary device 102 may upgrade the communication link 106 in response to using a cloud link. A cloud link is used when a large transfer is expected and upgrading the communication link may help the primary device 102 to respond quickly to a cloud link failure because a fast alternative pathway is already provisioned. In this case, upgrading the communication link 106 may mean changing the communication link to the fastest available communication link between the primary device 102 and the companion device 104.

### II. CHANGE RECOMMENDATION ARCHITECTURE

A communication link can be any combination of hardware and software that facilitates communication between a primary device and one or more companion devices. If multiple links are available, a recommendation engine on the primary device can compare change metrics to change criteria to determine whether to change from the current communication link to a different link. Recommendation handlers on each of the devices can use change recommendations to coordinate change in the communication link if the change criteria are satisfied by the change metrics.

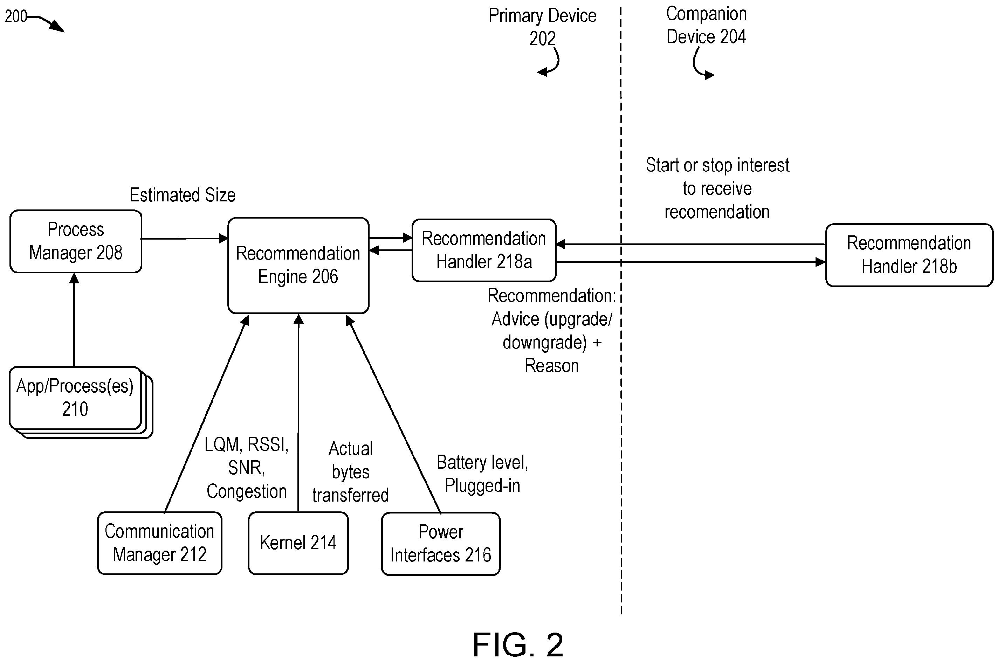

FIG. 2 shows a simplified diagram of an architecture 200 for a communication link between a primary device 202 and a companion device 204 according to at least one embodiment. The primary device 202 and the companion device 204 can be mobile devices including wearable electronic devices (e.g., a watch, a head-mounted display device, etc.). Any of the described engines (e.g., engine managers handlers, or processes) can be implemented in hardware, in software, or a combination of hardware and software.

### A. Primary Device

The primary device 202 can monitor a communication link, and the device's state, to determine whether to change communication links. The primary device 202 may be a power constrained device such as a wearable electronic device, and changing between communication links can help to maximize the primary device's battery life.

### 1. Recommendation Engine

The primary device 202 can include a recommendation engine 206 that compares change criteria and change metrics to determine whether to change between communication links. The recommendation engine 206 can be a system process of the primary device 202. The change criteria can include any combination of the device state, the transfer state, and the network state. The device state can provide information about the rate and direction of changes to the device's battery or power capacity. The device state can indicate whether the primary device 202 is power constrained, and the recommendation engine 206 can use this information to determine whether the change criteria permit a high-energy communication link.

The recommendation engine 206 can use the transfer state and network state to estimate the power cost and speed of a transfer over a communication link. The transfer state can include information about the size and type of pending transfers for a communication link. The network state can provide information about the signal environment for a communication link. The recommendation engine 206 can use the transfer state to determine how much information is to be sent to the companion device 204, and the engine can use the network state to determine how long it will take to send this information over each available communication link (e.g., a transfer time for each link). The recommendation engine 206 can use this transfer time and the power consumption rate from the device state to estimate a transfer's power cost (e.g., transfer time x power consumption rate).

### 2. Change Criteria

The recommendation engine 206 may select a communication link based on a comparison of change criteria to change metrics. The change criteria may be one or more rules in some embodiments. For example, the change criteria can be one or more rules that, if satisfied, will cause the recommendation engine 206 to recommend a change to a particular communication link. These rules may include one or more thresholds for each of the change metrics. A threshold may be a numerical value for a change metric and the threshold may be satisfied if the metric's value exceeds the threshold. In some embodiments, the threshold may be a probability or score, and the threshold can be compared against the output of a machine learning model. The input to the model may be a feature vector that is generated from one or more of the change metrics.

The rules in a change criteria may be a series of ordered decisions (e.g. a decision tree). For example, the recommendation engine 206 may only consider an upgrade to a Wi-Fi communication link if the battery capacity threshold is satisfied. Each communication link can have its own change criteria, and a communication link may have multiple separate sets of change criteria. The recommendation engine 206 may compare the change criteria against the change metrics at regular intervals (e.g., every 5 seconds) or in response to an event (e.g., a new file is queued for transfer). The communication link can be changed in response to the comparison, and after a change has been made, the recommendation engine 206 may start a change timer. In some embodiments, the recommendation engine 206 may not change the communication link until the change timer's concussion.

### 3. Change Metrics

Change metrics can describe the current condition of the primary device 202 and the communication link, and recommendation engine 206 can use the change metrics to determine whether to change communication links. The recommendation engine 206 may be an application or system process that uses application programming interfaces (APIs) to obtain the change metrics from the process manager 208, communication manager 212, kernel 214, and power interfaces 216. The change metrics can include any combination of any number of a device state, a transfer state, a network state, and a model state. The device state includes information about the power that is available to the device and the device's temperature. The transfer state provides information about communication over a communication link, and the network state includes the link's signal conditions. The device state, transfer state, and network state can be used as input to a machine learning model and the model's output can be a model state.

### a) Device State

The device state can be provided to the recommendation engine 206 by power interface 208. The device state can include a battery capacity (e.g., a battery percentage), a charging state (e.g., whether the device is charging), and a battery level (e.g., normal, low power, or critically low power). For example, the battery level can be a range of battery percentages (e.g., critically low can be between 10-15%, low can be between 15-40%, and normal can be between 40-100%). The recommendation engine 206 may use the device's state to determine whether a comparison to the change criteria will prioritize communication links with better transfer speed or power consumption. For example, transfer speed may be prioritized when the primary device 202 is charging or when the battery capacity is above a threshold (e.g., above 80%). In some circumstances, power consumption may be prioritized when the battery capacity is below a threshold (e.g., below 20%) or if the battery warning level is critical.

The device state can include a thermal state, and the recommendation engine 206 may use the thermal state to determine whether the change criteria will prioritize power consumption or transfer speed. Using a communication link with a high transfer speed may generate more heat than using a lower speed communication link. High operating temperatures can reduce the primary device's performance and the device's components may be damaged if the temperature is sufficiently high. Accordingly, the change criteria may prioritize a low power communication link if the device's temperature is above a threshold. The thermal state can be provided to the recommendation engine 206 by power interface 216, and the thermal state can include any combination of a device temperature and a temperature change rate.

### b) Transfer State

The recommendation engine 206 may use the transfer state to determine whether to change between communication links. The transfer state can include information about data that is being sent over a communication link. For example, the transfer state can include a transfer size, a transfer type, and a transfer priority. The transfer state for a file can be included in the file header (e.g., an HTTP header), and the transfer type can indicate whether the transfer includes any combination of an application file, an audio file, an image file, a text file, and a video file.

The recommendation engine 206 can use the transfer state to determine whether the transfer would be more efficient over a different communication link. A transfer over a first communication link may be more efficient than a transfer over a second communication link if it takes less time and/or consumes less power to send the same transfer over the first link than the second link. For example, a small file may be transmitted efficiently if it is sent over a low-energy and low-speed communication link (e.g., BLE link). In this example, the file is small enough that there is not a significant difference in the transfer time over any of the available links, and, therefore, a low-energy communication link is more efficient. However, a large file may be sent more efficiently over a high-energy and high-speed communication link (e.g., Wi-Fi link or Bluetooth link), because the high-speed link's throughput means that the link can be active for a comparatively short time period.

The transfer state can be provided by process manager 208 to the recommendation engine 206. Process manager 208 can schedule communication over the communication link for applications/processes 210. The process manager 208 can include one or more application programming interfaces (APIs) that are used to communicate with the applications/processes 210. For example, the process manager 208 can access transfer state information from the application/processes 210 using these APIs. In some embodiments, the process manager 208 can receive files from the applications/processes 210 and the manager can determine the transfer state for the received files. These files can be added to a queue, and, in some embodiments, the process manager 208 can provide the transfer state for queued files to the recommendation engine 206. In addition or alternatively, the process manager 208 may aggregate the transfer state for some or all of the queued files, and this aggregated transfer state can be provided to the recommendation engine 206. For example, the process manager 208 may provide a summed transfer size for the queued files, a summed transfer size files with a particular transfer priority, or a summed for transfer size for a particular transfer priority.

The transfer state may include information about the actual rate of information that is transferred over a communication link. The rate of transfer can be provided to the recommendation engine 206 by the kernel 214. The rate of transfer can be the observed rate of transfer of information over a communication link (e.g., bytes per second).

### c) Network State

A communication link's performance can vary depending on the environment where the devices are communicating, and the network state can provide information about a communication link's performance in a particular environment. The recommendation engine 206 can use a communication link's network state to determine whether to change communication links. For example, the recommendation engine 206 may select a first communication link because the link would satisfy one or more change metrics at the link's expected transfer rate under the initial network conditions. However, the recommendation engine 206 may change to a second communication link because a change to the network state indicates that the first communication link's transfer rate is likely to be slower than expected and the first communication link no longer satisfies the change metrics.

A communication link may transfer information through the exchange of wireless signals in a particular frequency range. Signal interference from other devices communicating in this frequency range can reduce the communication link's transfer rate. For example, signal interference can mean that the communication link's messages need to be resent, and the repeated messages can slow the communication link's transfer rate. The network state can include information about the signal congestion and failure rate for a communication link.

The communication manager 212 can provide the network state to the recommendation engine 206. The network state can be information about the network conditions over any number of time periods. The network conditions can include information about a particular communication link such as the packet loss rate, the signal to noise ratio (SNR), received signal strength indicator (RSSI) for the link. The network conditions can include information about the signal environment for communication links such as the network congestion for bandwidths that are used for communication links. The network conditions may include the available devices that are available for communication links and this information can be provided by a link quality manager (LQM) within the communication manager 212. The network state can include any combination of any number of Received Signal Strength Indicators (RSSIs), Signal to Noise Ratios (SNRs), Link Quality Metrics, Clear Channel Assessments (CCAs), transmission failure metrics, retransmission metrics, access point reliability metrics, data stall metrics, and connection to success ratios.

### d) Metric State

The change metrics may include a metric state, and the metric state can be a probability or score that is output from a machine learning model. The metric state can be determined using one or more of the device state, the transfer state, and the network state. These metrics can be used to generate an ordered list of numeric properties (e.g., a feature vector) that is input to the machine learning model. The metric state can be output from the machine learning model in response to the input. Machine learning models and model training are described in greater detail in section V.

### B. Example Advantages

The recommendation engine 206 may use the estimated power cost to determine whether to change from a first communication link to a second communication link. The communication links may use different communication circuitry and the power consumption rate for each link type may vary. For example, a Bluetooth link may consume power at a lower rate than a Wi-Fi link, however, the data transfer rate for the Wi-Fi link may be higher than the rate for a Bluetooth link.

The recommendation engine 206 may estimate a power cost by comparing the estimated transfer time and the power consumption rate for each link, and the engine 206 can use the power cost to determine whether to change communication links. In some circumstances, the power consumption for a transfer over a first communication link may be lower than the same transfer over a second communication link. This can be true even though the first communication link consumes power at a higher rate than the second link. For example, a Wi-Fi link may consume more power per second than a Bluetooth link. However, the Bluetooth link may have slower transfer speeds than the Wi-Fi link. In such circumstances, the Wi-Fi link may be more power efficient for large transfers because the communication link would be active for a shorter amount of time if the information is sent over a Wi-Fi communication link.

Power efficiency or transfer speed can be prioritized in different circumstances. For example, the recommendation engine 206 can use the device state to determine whether to prioritize power efficiency (e.g., minimizing power consumption) or transfer speed when selecting communication links. Power interface 216 can provide information about the device state to the recommendation engine 206. This information can include the amount of energy that is stored in the primary device's battery (e.g., a battery capacity) and a charging state for the device (e.g., whether the device is currently charging). The recommendation engine 206 may prioritize power efficiency if the battery capacity is below a threshold and the device is not charging. In some embodiments, the recommendation engine 206 may prioritize transfer speed if the battery capacity is above a threshold or the device is charging.

### C. Recommendation Handler

The recommendation engine 206 can send a link change recommendation to the companion device 204 via recommendation handlers 218a-218b (e.g., connection managers). The companion device 204 can change communication links in response to the recommendation. Changing links can include halting a transfer over the current communication link, providing power to the hardware for a second communication link, establishing a connection over the second communication link, and performing the transfer over the second communication link. The recommendation handler 218a can be part of the recommendation engine 206 on the primary device 202 in some embodiments. The recommendation handler 218b can be a daemon (e.g., a system process) that executes on the companion device 204.

The companion device 204 may indicate an availability to change connection types in some circumstances. The companion device 204 may use communication over recommendation handlers 218a-218b to signal whether the device is available to receive a change recommendation. For example, the companion device 204 may be unable to change connection link types because the device is in a low power state. The recommendation handler 218b can provide the companion device's availability to the primary device 202 via the recommendation handler 218a. The recommendation handler 218b may also indicate whether a recommendation to change communication links has been implemented. An attempt to change communication links may fail, and the recommendation handler 218b may revert to the original communication link in the event of failure.

### III. METHOD OF CHANGING A COMMUNICATION LINK

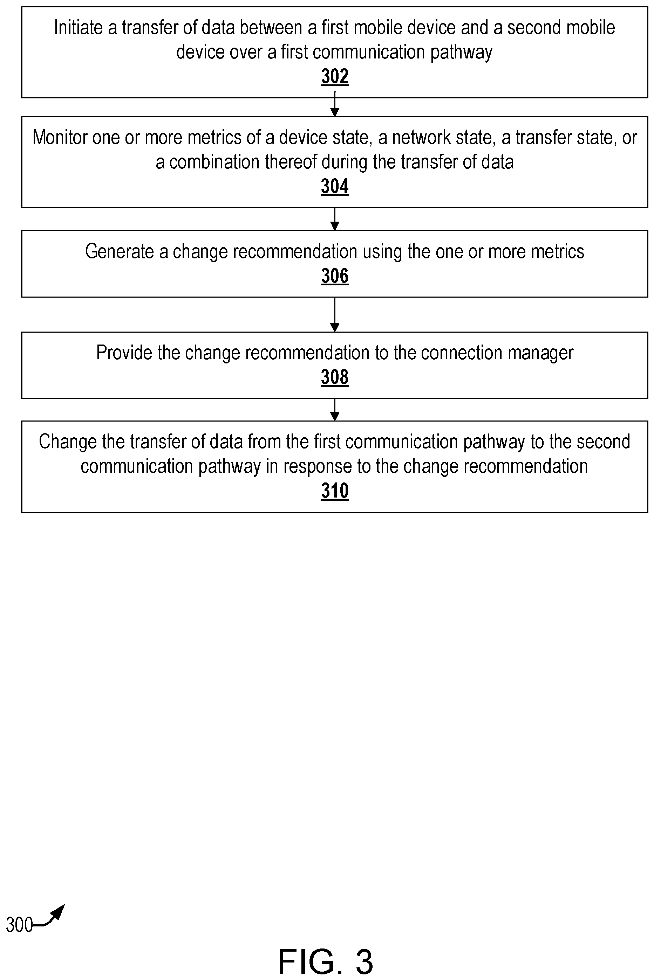

FIG. 3 is a flow chart of a process 300 for changing a communication link, according to an example of the present disclosure. According to an example, one or more process blocks of Process may be performed by an electronic device (e.g., watch device 700-800), a mobile device (e.g., mobile device 900), etc. A computer readable medium may store instructions for performing process 300 on one or more processors.

As shown in FIG. 3, at block 302, process 300 may include initiating a transfer of data between the first mobile device and a second mobile device over a first communication pathway. The transfer of data may be initiated in response to receiving a transfer request from the second mobile device. The transfer request may be received from an application or system process that is executing on a processor of the first mobile device (e.g., via an API). The first communication pathway and the second communication pathway can be communication links such as a BLE link, a Bluetooth link, or a Wi-Fi link. The first mobile device, the second mobile device, or the first mobile device, and the second mobile device can be a wearable device such as a smartwatch. The first mobile device, the second mobile device, or the first mobile device, and the second mobile device can be a smartphone.

At block 304, process 300 may include monitoring, by a system process of the first mobile device, one or more metrics measured of a device state, a network state, a transfer state, or a combination thereof during the transfer of data. The system process can be any combination of the recommendation engine and the recommendation handler. One or more metrics can include any combination of any number of the change metrics. The device state can include a charging state, a battery capacity, a thermal state (e.g., a temperature), a thermal change rate. The network state can include a throughput of the first communication link, a signal to noise ratio, a packet loss, etc. The transfer state can include a communication link type, a transfer type (e.g., streaming or downloading a file), and a transfer source. A file transfer size can be a metric in some embodiments. One or more metrics may include any combination of any number of a device state, a network state, or a transfer state of the second mobile device. These metrics may be received from the second mobile device in response to a request that is sent to the second mobile device over a communication pathway.

Monitoring one or more metrics can include determining that a transfer size exceeds a size threshold. For example, the size threshold can be 100 kilobits (kbits), 500 kbits, 1 megabit (Mbit), 10 Mbits, 20 Mbits, 30 Mbits, 40 Mbits, 50 Mbits, 100 Mbits, 500 Mbits, 1 gigabit (Gbit), 2 Gbits, 5 Gbits, 10 Gbits, 20 Gbits, 30 Gbits, 40 Gbits, 50 Gbits, and 100 Gbits. One or more metrics can be monitored during the transfer of data in response to the transfer size exceeding the transfer threshold. The metrics can include the device's state, the network state, and the transfer state, or a combination thereof.

The metrics can be monitored by a system process such as the recommendation handler or the process manager. The transfer state can include HTTP content length, HTTP content type, and service class. The network state can include Link Quality Metric (LQM) - first-hop link quality, Received Signal Strength Indicator (RSSI) - relative quality of received signal, Signal to Noise Ratio (SNR) - relative to noise floor power level, Clear Channel Assessment (CCA) - congestion, Number of transmission failures, number of retransmissions, reliability of the Wi-Fi access point, Wi-Fi data stalls, Wi-Fi connection to success ratios, etc. The device state can include Battery percentage, Battery charging/plugged in, Battery level (warning vs. critical), etc. The network state of the transfer of data may include one or more of a throughput, a packet error rate, a signal to noise ratio, a received signal strength indicator, a network congestion, and pathway driver metrics.

At block 306, process 300 may include generating, by the system process, a change recommendation using one or more metrics, the change recommendation indicating a change from the first communication pathway to a second communication pathway. The change recommendation can be determined by comparing change metrics to change criteria. The change criteria can include one or more probability thresholds. The change recommendation may be generated using a machine learning model. Any combination of any number of the transfer size, the device state, the network state, and the transfer state can be provided as input to a machine learning model (e.g., as a feature vector). A change recommendation, or a model metric, can be output by the machine learning model. The change recommendation can be a probability that a change from the first communication pathway to the second communication pathway is successful.

At block 308, process 300 may include providing the change recommendation to the connection manager (e.g., the recommendation handler). The recommendation handler may provide the change recommendation to a recommendation handler on the second mobile device. The recommendation handlers may be system processes in some embodiments. The change recommendation may be provided in response to a message from the recommendation handler on the second mobile device. The message can indicate that the second mobile device is available to receive the change recommendation.

At block 310, process 300 may include in response to the change recommendation, changing, by the connection manager, the transfer of data from the first communication pathway to the second communication pathway. The first communication pathway can be Bluetooth (e.g., a Bluetooth link or BLE link) and the second communication pathway can be Wi-Fi (e.g., a Wi-Fi link) in some embodiments. The second communication pathway can be Bluetooth and the first communication pathway can be Wi-Fi in some embodiments. In some embodiments the first or second communication pathway can be a nearest neighbor networking, ethernet, peer-to-peer links Thread, etc.

Process 300 may include changing the transfer of data from the second communication pathway to the first communication pathway. A change timer can be initiated in response to the change, and a change from the first communication pathway to the second communication pathway may be halted until the conclusion of the change timer.

Process 300 may include additional implementations, such as any single implementation or any combination of implementations described below and/or in connection with one or more other processes described elsewhere herein. In the first implementation, the second communication pathway has a higher bandwidth than the first communication pathway.

It should be noted that while FIG. 3 shows example blocks of process 300, in some implementations, process 300 may include additional blocks, fewer blocks, different blocks, or differently arranged blocks than those depicted in FIG. 3. Additionally, or alternatively, two or more of the blocks of process 300 may be performed in parallel.

In some embodiments, process 300 (FIG. 3) is performed at a first mobile device (as described herein) via a system process (e.g., an operating system process, a server system process) that is different from one or more applications executing and/or installed on the first mobile device.

In some embodiments, process 300 (FIG. 3) is performed at the first mobile device (as described herein) by an application that is different from a system process (e.g., the system process of the first mobile device). The system process, or the application, can be any combination of the recommendation engine 206 and the recommendation handler 218a. In some embodiments, the instructions of the application, when executed, control the first mobile device to perform process 300 (FIG. 3) by calling an application programming interface (API) provided by the system process. In some embodiments, the application performs at least a portion of process 300 without calling the API.

In some embodiments, the application is an accessory companion application that is constructed for processing communication and management between the first mobile device and a second mobile device.

In some embodiments, the application is an application that is pre-installed on the first mobile device at purchase (e.g., a first party application). In other embodiments, the application is an application that is provided to the first mobile device via an operating system update file (e.g., a first party application). In other embodiments, the application is an application that is provided via an application store. In some implementations, the application store is pre-installed on the first mobile device at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first mobile device to perform process 300 (FIG. 3) by calling an application programming interface (API) provided by the system process using one or more parameters.

In some embodiments, exemplary APIs provided by the system process include one or more of: a pairing API (e.g., for establishing a secure connection, e.g., with a second mobile device), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a Wi-Fi API, a bluetooth API, an NFC API, a UWB API, a fitness API, a smart home API, contact transfer API, photos API, camera API, and/or image processing API.

In some embodiments, at least one API is a software module (e.g., a collection of computer-readable instructions) that provides an interface that allows a different module (e.g., API calling module) to access and use one or more functions, methods, procedures, data structures, classes, and/or other services provided by an implementation module of the system process. The API can define one or more parameters that are passed between the API calling module and the implementation module. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 450) that runs the application. In some embodiments, the implementation module is included in an electronic device that is separate from the device that runs the application.

### IV. API

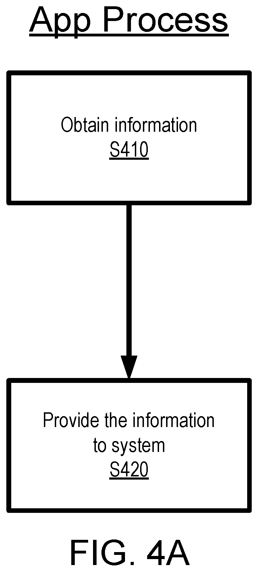

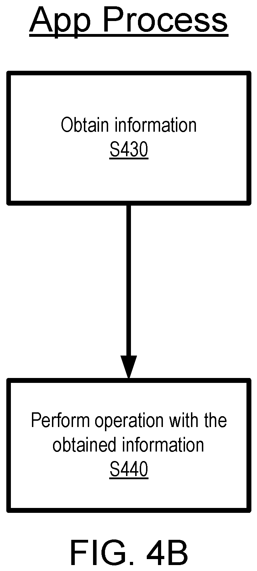

Implementations within the scope of the present disclosure include a computer-readable storage medium that encodes instructions organized as an application (e.g., application 460) that, when executed by one or more processing units, controls an electronic device or mobile device (e.g., device 450) to perform the method of FIG. 4A, the method of FIG. 4B, and/or one or more other processes and/or methods described herein.

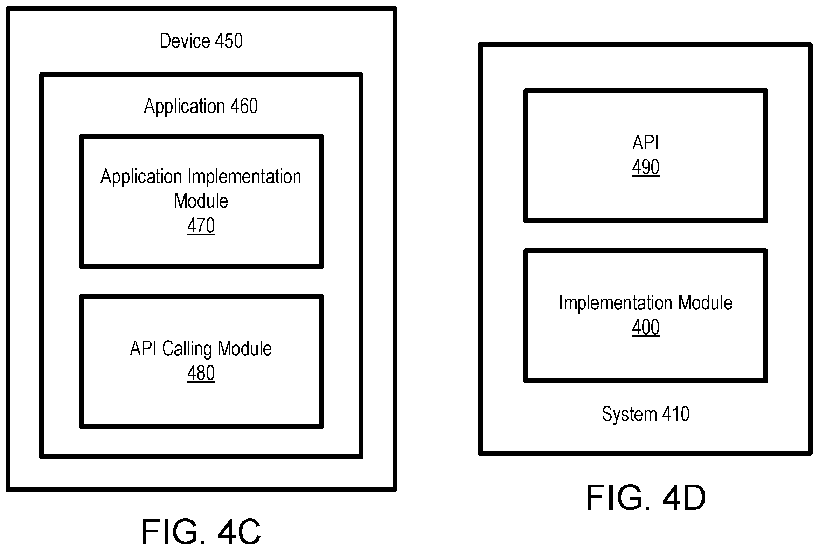

It should be recognized that application 460 (shown in FIG. 4C) can be any suitable type of application, including, for example, one or more of: an accessory companion application (e.g., recommendation handler 218a-218b), a browser application, an application that functions as an execution environment for plug-ins, widgets or other applications, a fitness application, a health application, a digital payments application, a media application, a social network application, a messaging application, and/or a maps application. In some embodiments, application 460 is an application that is pre-installed on device 450 at purchase (e.g., a first party application). In other embodiments, application 460 is an application that is provided to device 450 via an operating system update file (e.g., a first party application or a second party application). In other embodiments, application 460 is an application that is provided via an application store. In some embodiments, the application store can be an application store that is pre-installed on device 450 at purchase (e.g., a first party application store). In other embodiments, the application store is a third-party application store (e.g., an application store that is provided by another application store, downloaded via a network, and/or read from a storage device).

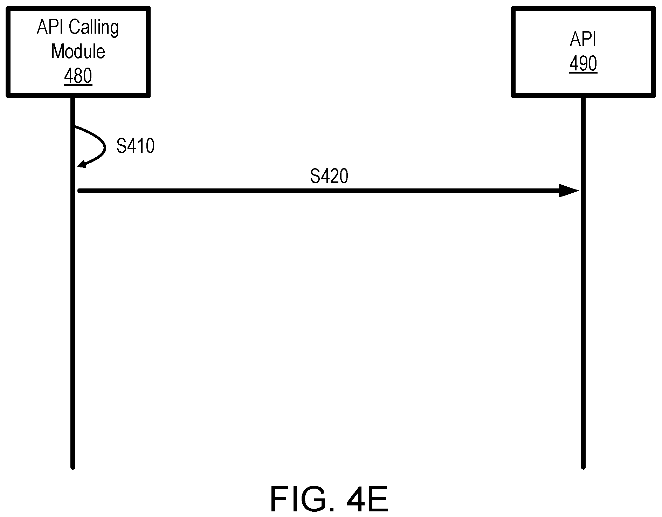

Referring to FIG. 4A and FIG 4E, application 460 obtains information (e.g., S410). In some embodiments, at S410, information is obtained from at least one hardware component of the device 450. In some embodiments, at S410, information is obtained from at least one software module of the device 450. In some embodiments, at S410, information is obtained from at least one hardware component external to the device 450 (e.g., a peripheral device, an accessory device, a server, etc.). In some embodiments, the information obtained at S410 includes positional information, time information, notification information, user information, environment information, electronic device state information, weather information, media information, historical information, event information, hardware information, and/or motion information. In some embodiments, in response to and/or after obtaining the information at S410, application 460 provides the information to a system (e.g., S420).

In some embodiments, the system (e.g., 410 shown in FIG. 4D) is an operating system hosted on the device 450. In some embodiments, the system (e.g., 410 shown in FIG. 4D) is an external device (e.g., a server, a peripheral device, an accessory, a personal computing device, etc.) that includes an operating system.

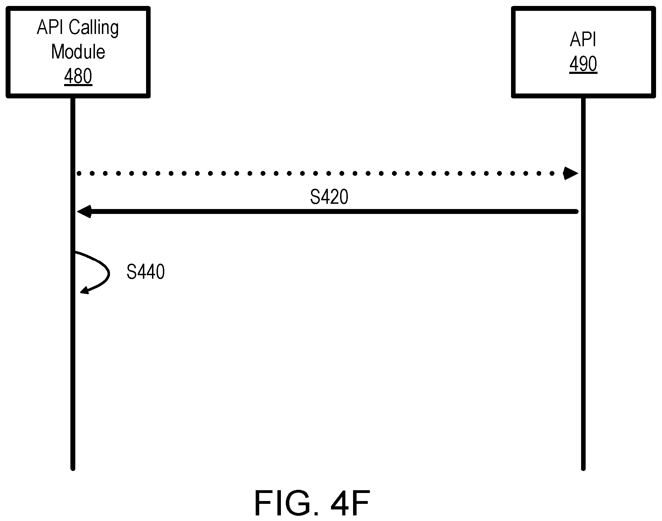

Referring to FIG. 4B and FIG. 4F, application 460 obtains information (e.g., S430). In some embodiments, the information obtained at S430 includes positional information, time information, notification information, user information, environment information electronic device state information, weather information, media information, historical information, event information, hardware information, and/or motion information. In response to and/or after obtaining the information at S430, application 460 performs an operation with the information (e.g., S440). In some embodiments, the operation performed at S440 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 410 based on the information.

In some embodiments, one or more steps of the method of FIG. 4A and/or the method of FIG. 4B is performed in response to a trigger. In some embodiments, the trigger includes the detection of an event, a notification received from system 410, a user input, and/or a response to a call to an API provided by system 410.

In some embodiments, the instructions of application 460, when executed, control device 450 to perform the method of FIG. 4A and/or the method of FIG. 4B by calling an application programming interface (API) (e.g., API 490) provided by system 410. In some embodiments, application 460 performs at least a portion of the method of FIG. 4A and/or the method of FIG. 4B without calling API 490.

In some embodiments, one or more steps of the method of FIG. 4A and/or the method of FIG. 4B includes calling an API (e.g., API 490) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 4C, device 450 is illustrated. In some embodiments, device 450 is a personal computing device, a smart phone, a smart watch, a fitness tracker, a head mounted display (HMD) device, a media device, a communal device, a speaker, a television, and/or a tablet. As illustrated in FIG. 4C, device 450 includes application 460 and operating system (e.g., system 410 shown in FIG. 4D). Application 460 includes application implementation module 470 and API calling module 480. System 410 includes API 490 and implementation module 400. It should be recognized that device 450, application 460, and/or system 410 can include more, fewer, and/or different components than illustrated in FIG. 4C and 4D.

In some embodiments, application implementation module 470 includes a set of one or more instructions corresponding to one or more operations performed by application 460. For example, when application 460 is a messaging application, application implementation module 470 can include operations to receive and send messages. In some embodiments, application implementation module 470 communicates with API calling module to communicate with system 410 via API 490 (shown in FIG. 4D).

In some embodiments, API 490 is a software module (e.g., a collection of computer-readable instructions) that provides an interface that allows a different module (e.g., API calling module 480) to access and/or use one or more functions, methods, procedures, data structures, classes, and/or other services provided by implementation module 400 of system 410. For example, API-calling module 480 can access a feature of implementation module 400 through one or more API calls or invocations (e.g., embodied by a function or a method call) exposed by API 490 and can pass data and/or control information using one or more parameters via the API calls or invocations. In some embodiments, API 490 allows application 460 to use a service provided by a Software Development Kit (SDK) library. In other embodiments, application 460 incorporates a call to a function or method provided by the SDK library and provided by API 490 or uses data types or objects defined in the SDK library and provided by API 490. In some embodiments, API-calling module 480 makes an API call via API 490 to access and use a feature of implementation module 400 that is specified by API 490. In such embodiments, implementation module 400 can return a value via API 490 to API-calling module 480 in response to the API call. The value can report to application 460 the capabilities or state of a hardware component of device 450, including those related to aspects such as input capabilities and state, output capabilities and state, processing capability, power state, storage capacity and state, and/or communications capability. In some embodiments, API 490 is implemented in part by firmware, microcode, or other low-level logic that executes in part on the hardware component.

In some embodiments, API 490 allows a developer of API-calling module 480 (which can be a third-party developer) to leverage a feature provided by implementation module 400. In such embodiments, there can be one or more API-calling modules (e.g., including API-calling module 480) that communicate with implementation module 400. In some embodiments, API 490 allows multiple API-calling modules written in different programming languages to communicate with implementation module 400 (e.g., API 490 can include features for translating calls and returns between implementation module 400 and API-calling module 480) while API 490 is implemented in terms of a specific programming language. In some embodiments, API-calling module 480 calls APIs from different providers such as a set of APIs from an OS provider, another set of APIs from a plug-in provider, and/or another set of APIs from another provider (e.g., the provider of a software library) or creator of the another set of APIs.

Examples of API 490 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a Wi-Fi API, a Bluetooth API, an NFC API, a UWB API, a fitness API, a smart home API, contact transfer API, photos API, camera API, and/or image processing API. In some embodiments the sensor API is an API for accessing data associated with a sensor of device 450. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometers, temperature sensor, infrared sensor, optical sensor, heartrate sensor, barometer, gyroscope, proximity sensor, temperature sensor and/or biometric sensor.

In some embodiments, implementation module 400 is a system (e.g., operating system, server system) software module (e.g., a collection of computer-readable instructions) that is constructed to perform an operation in response to receiving an API call via API 490. In some embodiments, implementation module 400 is constructed to provide an API response (via API 490) as a result of processing an API call. By way of example, implementation module 400 and API-calling module 180 can each be any one of an operating system, a library, a device driver, an API, an application program, or other module. It should be understood that implementation module 400 and API-calling module 480 can be the same or different type of module from each other. In some embodiments, implementation module 400 is embodied at least in part in firmware, microcode, or other hardware logic.

In some embodiments, implementation module 400 returns a value through API 490 in response to an API call from API-calling module 480. While API 490 defines the syntax and result of an API call (e.g., how to invoke the API call and what the API call does), API 490 might not reveal how implementation module 400 accomplishes the function specified by the API call. Various API calls are transferred via the one or more application programming interfaces between API-calling module 480 and implementation module 400. Transferring the API calls can include issuing, initiating, invoking, calling, receiving, returning, and/or responding to the function calls or messages. In other words, transferring can describe actions by either of API-calling module 480 or implementation module 400. In some embodiments, a function call or other invocation of API 490 sends and/or receives one or more parameters through a parameter list or other structure.

In some embodiments, implementation module 400 provides more than one API, each providing a different view of or with different aspects of functionality implemented by implementation module 400. For example, one API of implementation module 400 can provide a first set of functions and can be exposed to third party developers, and another API of implementation module 400 can be hidden (e.g., not exposed) and provide a subset of the first set of functions and also provide another set of functions, such as testing or debugging functions which are not in the first set of functions. In some embodiments, implementation module 400 calls one or more other components via an underlying API and thus be both an API calling module and an implementation module. It should be recognized that implementation module 400 can include additional functions, methods, classes, data structures, and/or other features that are not specified through API 490 and are not available to API calling module 480. It should also be recognized that API calling module 480 can be on the same system as implementation module 400 or can be located remotely and access implementation module 400 using API 490 over a network. In some embodiments, implementation module 400, API 490, and/or API-calling module 480 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

### V. MODEL TRAINING

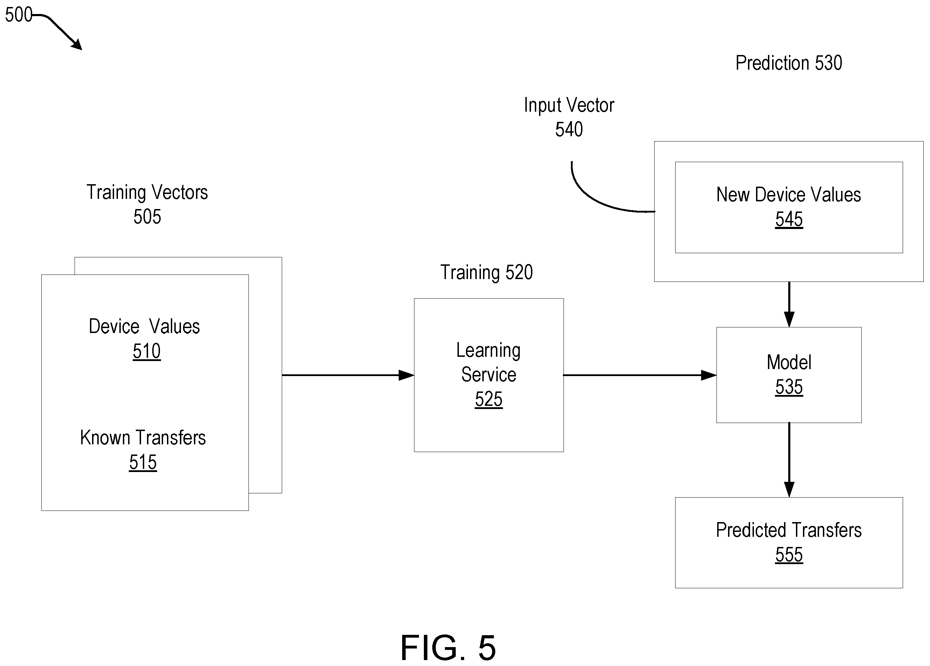

FIG. 5 depicts an architecture for training a machine learning model according to the embodiments of the present disclosure. Training vectors 505 are shown with device values 510 and a known transfers 515. Device values 510 can include the device state, the network state, the transfer state, the transfer size, etc. For ease of illustration, only two training vectors are shown, but the number of training vectors may be much larger, e.g., 10, 40, 100, 1,000, 10,000, 100,000, or more. Training vectors could be made for different physical environments, the same physical environment over different time periods.

Device values 510 have property fields that can correspond to the device values output by the first mobile device or the second mobile device and the skilled person will appreciate the various ways that such device values can be configured. Known transfers 515 include whether a communication link upgrade occurred, whether the transfer over the communication link was successful, and a transfer time for transfers within a time period that corresponds to the time the device values 510 were recorded.

Training vectors 505 can be used by a learning service 525 to perform training 520. A service, such as learning service 525, being one or more computing devices configured to execute computer code to perform one or more operations that make up the service. Learning service 525 can optimize parameters of a model 535 such that a quality metric (e.g., accuracy of model 535) is achieved with one or more specified criteria. The accuracy may be measured by comparing known transfers 515 to predicted transfers. Parameters of model 535 can be iteratively varied to increase accuracy. Determining a quality metric can be implemented for any arbitrary function including the set of all risk, loss, utility, and decision functions.

In some embodiments of training, a gradient may be determined for how varying the parameters affects a cost function, which can provide a measure of how accurate the current state of the machine learning model is. The gradient can be used in conjunction with a learning step (e.g., a measure of how much the parameters of the model should be updated for a given time step of the optimization process). The parameters (which can include weights, matrix transformations, and probability distributions) can thus be optimized to provide an optimal value of the cost function, which can be measured as being above or below a threshold (i.e., exceeds a threshold) or the cost function does not change significantly for several time steps, as examples. In other embodiments, training can be implemented with methods that do not require a hessian or gradient calculation, such as dynamic programming or evolutionary algorithms.

A prediction stage 530 can provide a predicted transfers 555 for a new entity's signature vector 540 based on new device values 545. The predicted transfers 555 can be any combination of any number of a predicted transfer success, a transfer size, a transfer duration, a transfer throughput, and a transfer power consumption that correspond to the input vector 540. The new device values can be of a similar type as device values 510. If new device values are of a different type, a transformation can be performed on the data to obtain data in a similar format as device values 510. Ideally, predicted transfers 555 corresponds to the true transfers for input vector 540.

A *"machine learning model"* (ML model) can refer to a software module configured to be run on one or more processors to provide a classification or numerical value of a property of one or more samples. An ML model can be generated using sample data (e.g., training data) to make predictions on test data. One example is an unsupervised learning model. Another example type of model is supervised learning that can be used with embodiments of the present disclosure. Example supervised learning models may include different approaches and algorithms including analytical learning, statistical models, artificial neural network, backpropagation, boosting (meta-algorithm), Bayesian statistics, case-based reasoning, decision tree learning, inductive logic programming, Gaussian process regression, genetic programming, group method of data handling, kernel estimators, learning automata, learning classifier systems, minimum message length (decision trees, decision graphs, etc.), multilinear subspace learning, naive Bayes classifier, maximum entropy classifier, conditional random field, nearest neighbor algorithm, probably approximately correct learning (PAC) learning, ripple down rules, a knowledge acquisition methodology, symbolic machine learning algorithms, sub-symbolic machine learning algorithms, minimum complexity machines (MCM), random forests, ensembles of classifiers, ordinal classification, data pre-processing, handling imbalanced datasets, statistical relational learning, or Proaftn, a multicriteria classification algorithm. The model may include linear regression, logistic regression, deep recurrent neural network (e.g., long short-term memory, LSTM), hidden Markov model (HMM), linear discriminant analysis (LDA), k-means clustering, density-based spatial clustering of applications with noise (DBSCAN), random forest algorithm, support vector machine (SVM), or any model described herein. Supervised learning models can be trained in various ways using various cost/loss functions that define the error from the known label (e.g., least squares and absolute difference from known classification) and various optimization techniques, e.g., using backpropagation, steepest descent, conjugate gradient, and Newton and quasi-Newton techniques.

Examples of machine learning models include deep learning models, neural networks (e.g., deep learning neural networks), kernel-based regressions, adaptive basis regression or classification, Bayesian methods, ensemble methods, logistic regression and extensions, Gaussian processes, support vector machines (SVMs), a probabilistic model, and a probabilistic graphical model. Embodiments using neural networks can employ using wide and tensorized deep architectures, convolutional layers, dropout, various neural activations, and regularization steps.

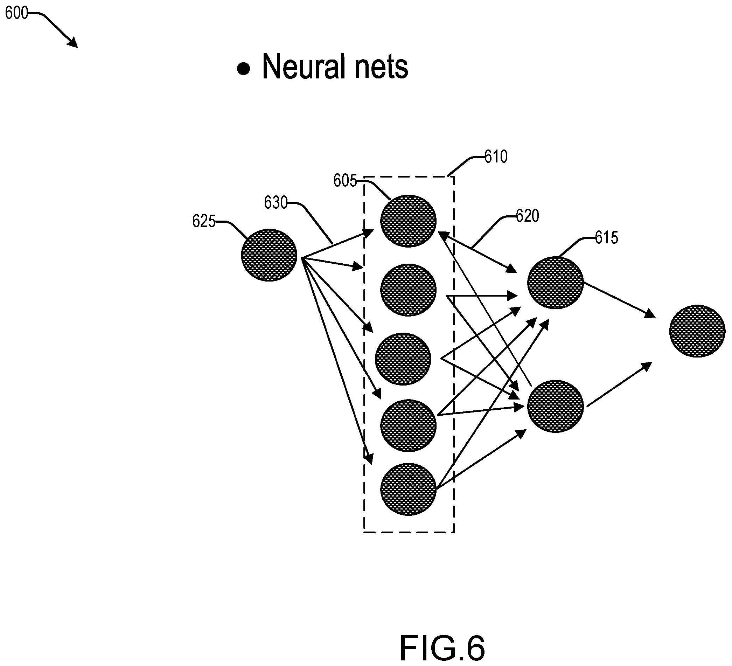

FIG. 6 shows an example machine learning model of a neural network. As an example, model 635 can be a neural network that comprises a number of neurons (e.g., Adaptive basis functions) organized in layers. For example, neuron 605 can be part of layer 610. The neurons can be connected by edges between neurons. For example, neuron 605 can be connected to neuron 615 by edge 620. A neuron can be connected to any number of different neurons in any number of layers. For instance, neuron 605 can be connected to neuron 625 by edge 630 in addition to being connected to neuron 615.

The training of the neural network can iteratively search for the best configuration of the parameter of the neural network for feature recognition and prediction performance. Various numbers of layers and nodes may be used. A person with skills in the art can easily recognize variations in a neural network design and design of other machine learning models. For example, neural networks can include graph neural networks that are configured to operate on unstructured data. A graph neural network can receive a graph (e.g., nodes connected by edges) as an input to the model and the graph neural network can learn the features of this input through pairwise message passing. In pairwise message passing, nodes exchange information and each node iteratively updates its representation based on the passed information.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provider transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

In some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

In some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

### VI. DEVICES

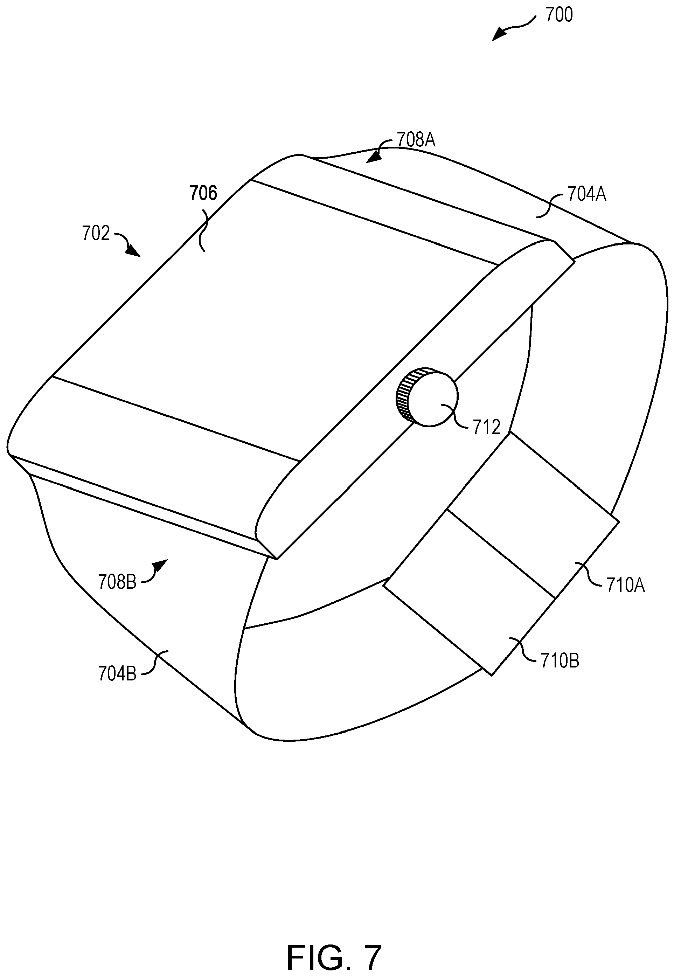

Embodiments described herein may take the form of, be incorporated in, or operate with a suitable electronic device, e.g., companion devices or a watch device. One example of such a device is shown in FIG. 7 and takes the form of a wearable watch device. Alternative embodiments of suitable electronic devices include a mobile phone, a tablet computing device, a portable media player, and so on. Still other suitable electronic devices may include laptop/notebook computers, personal digital assistants, touch screens, input-sensitive pads or surfaces, and so on.

FIG. 7 shows a wearable watch device 700 according to some embodiments of the present invention. In this example, wearable device 700 is shown as a wristwatch-like device with a face portion 702 connected to straps 704A, 704B. In many embodiments, the electronic device may keep and display time, essentially functioning as a wristwatch among other things. Time may be displayed in an analog or digital format, depending on the device, its settings, and (in some cases) a user's preferences. Typically, time is displayed on a digital display stack forming part of the exterior of the device.

Face portion 702 can include, e.g., a touchscreen display 706 that can be appropriately sized depending on where on a user's person wearable device 700 is intended to be worn. A user can view information presented by wearable device 700 on touchscreen display 706 and provide input to wearable device 700 by touching touchscreen display 706. In some embodiments, touchscreen display 706 can occupy most or all of the front surface of face portion 702.

Straps 704A, 704B can be provided to allow wearable device 700 to be removably worn by a user, e.g., around the user's wrist, and secured thereto. In some embodiments, straps 704A, 704B can be made of any flexible material (e.g., fabrics, flexible plastics, leather, chains or flexibly interleaved plates or links made of metal or other rigid materials) and can be connected to face portion 702, e.g., by hinges. Alternatively, straps 704A, 704B can be made of a rigid material, with one or more hinges positioned at the junction of face 702 and proximal ends 708A, 708B of straps 704A, 704B and/or elsewhere along the lengths of straps 704A, 704B to allow a user to put on and take off wearable device 700. Different portions of straps 704A, 704B can be made of different materials; for instance, flexible or expandable sections can alternate with rigid sections. In some embodiments, one or both of straps 704A, 704B can include removable sections, allowing wearable device 700 to be resized to accommodate a particular user's wrist size. In some embodiments, straps 704A, 704B can be portions of a continuous strap member that runs behind or through face portion 702. Face portion 702 can be detachable from straps 704A, 704B; permanently attached to straps 704A, 704B; or integrally formed with straps 704A, 704B.

The distal ends of straps 704A, 704B opposite face portion 702 can provide complementary clasp members 710A, 710B that can be engaged with each other to secure the distal ends of straps 704A, 704B to each other, forming a closed loop. In this manner, device 700 can be secured to a user's person, e.g., around the user's wrist; clasp members 710A, 710B can be subsequently disengaged to facilitate removal of device 700 from the user's person. The design of clasp members 710A, 710B can be varied; in various embodiments, clasp members 710A, 710B can include buckles, magnetic clasps, mechanical clasps, snap closures, etc. In some embodiments, one or both of clasp members 710A, 710B can be movable along at least a portion of the length of corresponding strap 704A, 704B, allowing wearable device 700 to be resized to accommodate a particular user's wrist size.

Straps 704A, 704B can be two distinct segments, or they can be formed as a continuous band of an elastic material (including, e.g., elastic fabrics, expandable metal links, or a combination of elastic and inelastic sections), allowing wearable device 700 to be put on and taken off by stretching a band formed by straps 704A, 704B. In such embodiments, clasp members 710A, 710B can be omitted.

Straps 704A, 704B and/or clasp members 710A, 710B can include sensors that allow wearable device 700 to determine whether it is being worn at any given time. Wearable device 700 can operate differently depending on whether it is currently being worn or not. For example, wearable device 700 can inactivate various user interface and/or RF interface components when it is not being worn. In addition, in some embodiments, wearable device 700 can notify a companion device (e.g., a smartphone, a mobile device, a tablet device, a media player, a speaker, or other electronic devices) when a user puts on or takes off wearable device 700.

In various embodiments, wearable device 700 includes a rotary input such as a crown 712 (also referred to as digital crown throughout the specification). Crown 712 can be used to perform a variety of functions. In some embodiments, crown 712 provides rotation input for navigating content (e.g., zooming in and out of content, panning across content). In this example, crown 712 includes a plastic or metal crown body, preferably having conventional outer teeth. Typically, a pedestal made integral with the body of crown 715 is positioned and protrudes into face portion 702. Crown 712 may be fastened, either permanently or removably, to hardware associated with wearable device 700. Rotation of the crown (and/or a stem) may be sensed optically, electrically, magnetically, or mechanically. Further, in some embodiments the crown (and/or stem) may also move laterally, thereby providing a second type of input to the device.

Wearable device 700 may likewise include one or more buttons (not shown here). The button(s) may be depressed to provide yet another input to the device. In various embodiments, the button may be a dome switch, rocker switch, electrical contact, magnetic switch, and so on. In some embodiments the button may be waterproof or otherwise sealed against the environment.

It will be appreciated that wearable device 700 is illustrative and that variations and modifications are possible. For example, wearable device 700 can be implemented in any wearable article, including a watch, a bracelet, a necklace, a ring, a belt, a jacket, or the like. In some instances, wearable device 700 can be a clip-on device or pin-on device that has a clip or pin portion that attaches to the user's clothing. The interface portion (including, e.g., touchscreen display 706) can be attached to the clip or pin portion by a retractable cord, and a user can easily pull touchscreen display 706 into view for use without removing the clip or pin portion, then let go to return wearable device 700 to its resting location. Thus, a user can wear wearable device 700 in any convenient location.

Wearable device 700 can be implemented using electronic components disposed within face portion 702, straps 704A, 704B, and/or clasp members 710A, 710B.

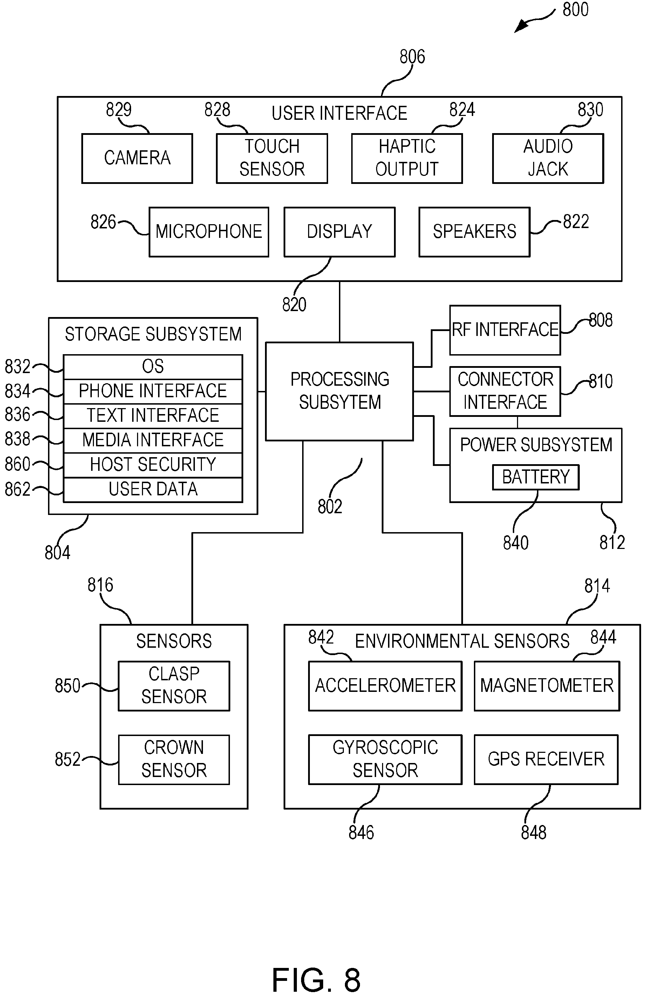

FIG. 8 is a simplified block diagram of a device 800 (e.g., wearable device 700 or a companion device) according to an embodiment of the present invention. Wearable device 800 can include processing subsystem 802, storage subsystem 804, user interface 806, RF interface 808, connector interface 810, power subsystem 812, environmental sensors 814, and strap sensors 816. Wearable device 800 can also include other components (not explicitly shown).

In many embodiments, the electronic device may keep and display time, essentially functioning as a wristwatch among other things. Time may be displayed in an analog or digital format, depending on the device, its settings, and (in some cases) a user's preferences. Typically, time is displayed on a digital display stack forming part of the exterior of the device.

Storage subsystem 804 can be implemented, e.g., using magnetic storage media, flash memory, other semiconductor memory (e.g., DRAM, SRAM), or any other non-transitory storage medium, or a combination of media, and can include volatile and/or non-volatile media. In some embodiments, storage subsystem 804 can store media items such as audio files, video files, image or artwork files; information about a user's contacts (names, addresses, phone numbers, etc.); information about a user's scheduled appointments and events; notes; and/or other types of information, examples of which are described below. In some embodiments, storage subsystem 804 can also store one or more application programs to be executed by processing subsystem 802 (e.g., video game programs, personal information management programs, media playback programs, interface programs associated with particular host devices and/or host device functionalities, etc.).

User interface 806 can include any combination of input and output devices. A user can operate input devices of user interface 806 to invoke the functionality of wearable device 800 and can view, hear, and/or otherwise experience output from wearable device 800 via output devices of user interface 806.

Examples of output devices include display 820, speakers 822, and haptic output generator 824. Display 820 can be implemented using compact display technologies, e.g., LCD (liquid crystal display), LED (light-emitting diode), OLED (organic light-emitting diode), or the like. In some embodiments, display 820 can incorporate a flexible display element or curved-glass display element, allowing wearable device 800 to conform to a desired shape. One or more speakers 822 can be provided using small-form-factor speaker technologies, including any technology capable of converting electronic signals into audible sound waves. In some embodiments, speakers 822 can be used to produce tones (e.g., beeping or ringing) and can but need not be capable of reproducing sounds such as speech or music with any particular degree of fidelity. Haptic output generator 824 can be, e.g., a device that converts electronic signals into vibrations; in some embodiments, the vibrations can be strong enough to be felt by a user wearing wearable device 800 but not so strong as to produce distinct sounds.

Wearable device 800 may also provide alerts to a user. An alert may be generated in response to: a change in status of the device (one example of which is power running low); receipt of information by the device (such as receiving a message); communications between the device and another mechanism/device (such as a second type of device informing the device that a message is waiting or communication is in progress); an operational state of an application (such as, as part of a game, or when a calendar appointment is imminent) or the operating system (such as when the device powers on or shuts down); and so on. The number and types of triggers for an alert are various and far-ranging.

The alert may be auditory, visual, haptic, or a combination thereof. A haptic actuator may be housed within the device and may move linearly to generate haptic output (although in alternative embodiments the haptic actuator may be rotary or any other type). A speaker may provide auditory components of an alert, and the aforementioned display may provide visual alert components. In some embodiments a dedicated light, display, or other visual output component may be used as part of an alert.

The auditory, haptic and/or visual components of the alert may be synchronized to provide an overall experience to a user. One or more components may be delayed relative to other components to create a desired synchronization between them. The components may be synchronized so that they are perceived substantially simultaneously; as one example, a haptic output may be initiated slightly before an auditory output since the haptic output may take longer to be perceived than the audio. As another example, a haptic output (or portion thereof) may be initiated substantially before the auditory output but at a weak or even subliminal level, thereby priming the wearer to receive the auditory output.

Examples of input devices include microphone 826, touch sensor 828, and camera 829. Microphone 826 can include any device that converts sound waves into electronic signals. In some embodiments, microphone 826 can be sufficiently sensitive to provide a representation of specific words spoken by a user; in other embodiments, microphone 826 can be usable to provide indications of general ambient sound levels without necessarily providing a high-quality electronic representation of specific sounds.

Touch sensor 828 can include, e.g., a capacitive sensor array with the ability to localize contacts to a particular point or region on the surface of the sensor and in some instances, the ability to distinguish multiple simultaneous contacts. In some embodiments, touch sensor 828 can be overlaid over display 820 to provide a touchscreen interface, and processing subsystem 802 can translate touch events (including taps and/or other gestures made with one or more contacts) into specific user inputs depending on what is currently displayed on display 820. In some embodiments, touch sensor 828 can also determine a location of a touch on the cover glass. A touch sensor may be incorporated into or on the display stack in order to determine a location of a touch. The touch sensor may be self-capacitive in certain embodiments, mutual-capacitive in others, or a combination thereof.

The display stack may include a cover element, such as a cover glass, overlying a display. The cover glass need not necessarily be formed from glass, although that is an option; it may be formed from sapphire, zirconia, alumina, chemically strengthened glass, hardened plastic, and so on. Likewise, the display may be a liquid crystal display, an organic light-emitting diode display, or any other suitable display technology. Among other elements, the display stack may include a backlight in some embodiments.

Camera 829 can include, e.g., a compact digital camera that includes an image sensor such as a CMOS sensor and optical components (e.g. lenses) arranged to focus an image onto the image sensor, along with control logic operable to use the imaging components to capture and store still and/or video images. Images can be stored, e.g., in storage subsystem 804 and/or transmitted by wearable device 800 to other devices for storage. Depending on implementation, the optical components can provide fixed focal distance or variable focal distance; in the latter case, autofocus can be provided. In some embodiments, camera 829 can be disposed along an edge of face portion 702 of FIG. 7, e.g., the top edge, and oriented to allow a user to capture images of nearby objects in the environment such as a bar code or QR code. In other embodiments, camera 829 can be disposed on the front surface of face member 702 of FIG. 7, e.g., to capture images of the user. Zero, one, or more cameras can be provided, depending on implementation.

In some embodiments, user interface 806 can provide output to and/or receive input from an auxiliary device such as a headset. For example, audio jack 830 can connect via an audio cable (e.g., a standard 2.5-mm or 3.5-mm audio cable) to an auxiliary device. Audio jack 830 can include input and/or output paths. Accordingly, audio jack 830 can provide audio to the auxiliary device and/or receive audio from the auxiliary device. In some embodiments, a wireless connection interface can be used to communicate with an auxiliary device.

Processing subsystem 802 can be implemented as any electronic device capable of processing, receiving, or transmitting data or instructions. Processing subsystem 802 can include one or more integrated circuits. For example, processing subsystem 802 may include one or more of: one or more single-core or multi-core microprocessors or microcontrollers, a central processing unit (CPU), an application-specific integrated circuit (ASIC), a digital signal processor (DSP), or additional combinations of such devices. In operation, processing subsystem 802 can control the operation of wearable device 800. In various embodiments, processing subsystem 802 can execute a variety of programs in response to program code and can maintain multiple concurrently executing programs or processes. At any given time, some or all of the program code to be executed can be resident in processing subsystem 802 and/or in storage media such as storage subsystem 804.

Through suitable programming, processing subsystem 802 can provide various functionality for wearable device 800. For example, in some embodiments, processing subsystem 802 can execute an operating system (OS) 832 and various applications for interfacing with a host device, such as a phone-interface application 834, a text-interface application 836, and/or a media interface application 838. In some embodiments, some or all of these application programs can interact with a host device, e.g., by generating messages to be sent to the host device and/or by receiving and interpreting messages from the host device. In some embodiments, some or all of the application programs can operate locally to wearable device 800. For example, if wearable device 800 has a local media library stored in storage subsystem 804, media interface application 838 can provide a user interface to select and play locally stored media items. Examples of interface applications are described below.

In some embodiments, processing subsystem 802 can also execute a host security process 860 that provides support for establishing and maintaining a verified communication session with a host device. A verified communication session can provide an enhanced level of security, and various operations of wearable device 800 and/or a host device can be made conditional on whether a verified communication session between the devices is in progress. For instance, host security process 860 can facilitate unlocking a host device when wearable device 800 is present, depending on whether a verified session is in progress. User data 862 can include any information specific to a user, such as identification information, user-specified settings and preferences, customized information (e.g., contacts, predefined text messages), and any other user-related data or content. In some embodiments, executing applications and processes can access user data 862 to facilitate operations.

RF (radio frequency) interface 808 can allow wearable device 800 to communicate wirelessly with various host devices. RF interface 808 can include RF transceiver components such as an antenna and supporting circuitry to enable data communication over a wireless medium, e.g., using Wi-Fi (IEEE 902.7 family standards), Bluetooth^{®} (a family of standards promulgated by Bluetooth SIG, Inc.), or other protocols for wireless data communication. RF interface 808 can be implemented using a combination of hardware (e.g., driver circuits, antennas, modulators/demodulators, encoders/decoders, and other analog and/or digital signal processing circuits) and software components. In some embodiments, RF interface 808 can provide near-field communication ("NFC") capability, e.g., implementing the ISO/IEC 18092 standards or the like; NFC can support wireless data exchange between devices over a very short range (e.g., 20 centimeters or less). Multiple different wireless communication protocols and associated hardware can be incorporated into RF interface 808. Wearable device 800 may wirelessly communicate with a sales terminal nearby, thus permitting a user to quickly and efficiently conduct a transaction such as selling, buying, or returning a good. Wearable device 800 may use NFC technology to perform these and other functions.

Connector interface 810 can allow wearable device 800 to communicate with various host devices via a wired communication path, e.g., using Universal Serial Bus (USB), universal asynchronous receiver/transmitter (UART), or other protocols for wired data communication. In some embodiments, connector interface 810 can provide a power port, allowing wearable device 800 to receive power, e.g., to charge an internal battery. For example, connector interface 810 can include a connector such as a mini-USB connector or a custom connector, as well as supporting circuitry. In some embodiments, the connector can be a custom connector that provides dedicated power and ground contacts, as well as digital data contacts that can be used to implement different communication technologies in parallel; for instance, two pins can be assigned as USB data pins (D+ and D-) and two other pins can be assigned as serial transmit/receive pins (e.g., implementing a UART interface). The assignment of pins to particular communication technologies can be hardwired or negotiated while the connection is being established. In some embodiments, the connector can also provide connections for audio and/or video signals, which may be transmitted to or from a host device in analog and/or digital formats.

In some embodiments, connector interface 810 and/or RF interface 808 can be used to support synchronization operations in which data is transferred from a host device to wearable device 800 (or vice versa). For example, as described below, a user can customize certain information for wearable device 800 (e.g., a "favorite" contacts list and/or specific predefined text messages that can be sent). While user interface 806 can support data-entry operations, a user may find it more convenient to define customized information on a separate device (e.g., a tablet or smartphone) that has a larger interface (e.g., including a real or virtual alphanumeric keyboard), then transfer the customized information to wearable device 800 via a synchronization operation. Synchronization operations can also be used to load and/or update other types of data in storage subsystem 804, such as media items, application programs, and/or operating system programs. Synchronization operations can be performed in response to an explicit user request and/or automatically, e.g., when wireless device 800 resumes communication with a particular host device or in response to either device receiving an update to its copy of synchronized information.

Environmental sensors 814 can include various electronic, mechanical, electromechanical, optical, or other devices that provide information related to external conditions around wearable device 800. Sensors 814 in some embodiments can provide digital signals to processing subsystem 802, e.g., on a streaming basis or in response to polling by processing subsystem 802 as desired. Any type and combination of environmental sensors can be used; shown by way of example are accelerometer 842, a magnetometer 844, a gyroscope sensor 846, and a GPS receiver 848.

Some environmental sensors can provide information about the location and/or motion of wearable device 800. For example, accelerometer 842 can sense acceleration (relative to free fall) along one or more axes, e.g., using piezoelectric or other components in conjunction with associated electronics to produce a signal. Magnetometer 844 can sense an ambient magnetic field (e.g., Earth's magnetic field) and generate a corresponding electrical signal, which can be interpreted as a compass direction. Gyroscopic sensor 846 can sense rotational motion in one or more directions, e.g., using one or more MEMS (micro-electro-mechanical systems) gyroscopes and related control and sensing circuitry. Global Positioning System (GPS) receiver 848 can determine location based on signals received from GPS satellites.

Other sensors can also be included in addition to or instead of these examples. For example, a sound sensor can incorporate microphone 826 together with associated circuitry and/or program code to determine, e.g., a decibel level of ambient sound. Temperature sensors, proximity sensors, ambient light sensors, or the like can also be included. The ambient light sensor may permit the device to sense a brightness of its environment and adjust certain operational parameters accordingly. For example, wearable device 800 may modify a brightness of a display in response to the sensed ambient light. As another example, wearable device 800 may turn the display off if little or no light is sensed for a period of time.

Sensors 816 can include various electronic, mechanical, electromechanical, optical, or other devices that provide information to wearable device 800. Crown sensors 852 can also include motion sensors, accelerometers, pressure sensors (e.g., piezoelectric devices), or the like.

Any other type of sensor can be used in addition to or instead of strap sensors 816 and crown sensors 852. For instance, physiological or biometric sensors, such as pulse sensors, ECG sensors, or the like can be provided. In some embodiments, physiological sensors can monitor a user's physiological signals and provide health-related information based on those signals. In certain embodiments, physiological or biometric sensors can be used in verifying the identity of the wearer of wearable device 800.

Certain embodiments may incorporate one or more biometric sensors to measure certain physiological characteristics of a user. The device may include a photoplesymogram sensor to determine a user's heart rate or blood oxygenation levels, for example. The device may also or instead include electrodes to measure the body impedance of a user, which may permit the device to estimate body fat percentages, the body's electrical activity, body impedance, and so on. In some embodiments, the device may also measure blood pressure, ultraviolet exposure, etc. Depending on the sensors incorporated into or associated with the electronic device, a variety of user characteristics may be measured and/or estimated, thereby permitting different health information to be provided to a user. In some examples, the sensed biometric information may be used by the alert manager, in part, for managing the electronic content and/or the incoming alerts.

Similarly, wearable device 800 may include a force sensor (not shown here) to determine an amount of force applied to the cover glass. The force sensor may be a capacitive sensor in some embodiments and a strain sensor in other embodiments. In either embodiment, the force sensor is generally transparent and made form transparent materials or is located beneath or away from the display in order not to interfere with the view of the display. The force sensor may, for example, take the form of two capacitive plates separated by silicone or another deformable material. As the capacitive plates move closer together under an external force, the change in capacitance may be measured and a value of the external force correlated from the capacitance change. Further, by comparing relative capacitance changes from multiple points on the force sensor, or from multiple force sensors, a location or locations at which force is exerted may be determined. In one embodiment the force sensor may take the form of a gasket extending beneath the periphery of the display. The gasket may be segmented or unitary, depending on the embodiment.

Power subsystem 812 can provide power and power management capabilities for wearable device 800. For example, power subsystem 812 can include a battery 840 (e.g., a rechargeable battery) and associated circuitry to distribute power from battery 840 to other components of wearable device 800 that require electrical power. In some embodiments, power subsystem 812 can also include circuitry operable to charge battery 840, e.g., when connector interface 810 is connected to a power source. In some embodiments, power subsystem 812 can include a "wireless" charger, such as an inductive charger, to charge battery 840 without relying on connector interface 810. An inductive charging base may transmit power to an inductive receiver within the device in order to charge a battery of the device. Further, by varying the inductive field between the device and base, data may be communicated between the two. As one simple non-limiting example, this may be used to wake the base from a low-power sleep state to an active charging state when the device is placed on the base. Other wireless charging systems also may be used (e.g., near field magnetic resonance and radio frequency). Alternatively, the device also may employ wired charging through electrodes. In some embodiments, power subsystem 812 can also include other power sources, such as a solar cell, in addition to or instead of battery 840.

In some embodiments, power subsystem 812 can control power distribution to components within wearable device 800 to manage power consumption efficiently. For example, power subsystem 812 can automatically place device 800 into a "hibernation" state when strap sensors 816 indicate that device 800 is not being worn. The hibernation state can be designed to reduce power consumption; accordingly, user interface 806 (or components thereof), RF interface 808, connector interface 810, and/or environmental sensors 814 can be powered down (e.g., to a low-power state or turned off entirely), while strap sensors 816 are powered up (either continuously or at intervals) to detect when a user puts on wearable device 800. As another example, in some embodiments, while wearable device 800 is being worn, power subsystem 812 can turn display 820 and/or other components on or off depending on motion and/or orientation of wearable device 800 detected by environmental sensors 814. For instance, if wearable device 800 is designed to be worn on a user's wrist, power subsystem 812 can detect raising and rolling of a user's wrist, as is typically associated with looking at a wristwatch, based on information provided by accelerometer 842. In response to this detected motion, power subsystem 812 can automatically turn display 820 and/or touch sensor 828 on; similarly, power subsystem 812 can automatically turn display 820 and/or touch sensor 828 off in response to detecting that user's wrist has returned to a neutral position (e.g., hanging down).

Power subsystem 812 can also provide other power management capabilities, such as regulating power consumption of other components of wearable device 800 based on the source and amount of available power, monitoring stored power in battery 840, generating user alerts if the stored power drops below a minimum level, and so on.

In some embodiments, control functions of power subsystem 812 can be implemented using programmable or controllable circuits operating in response to control signals generated by processing subsystem 802 in response to program code executing thereon, or as a separate microprocessor or microcontroller.

It will be appreciated that wearable device 800 is illustrative and that variations and modifications are possible.

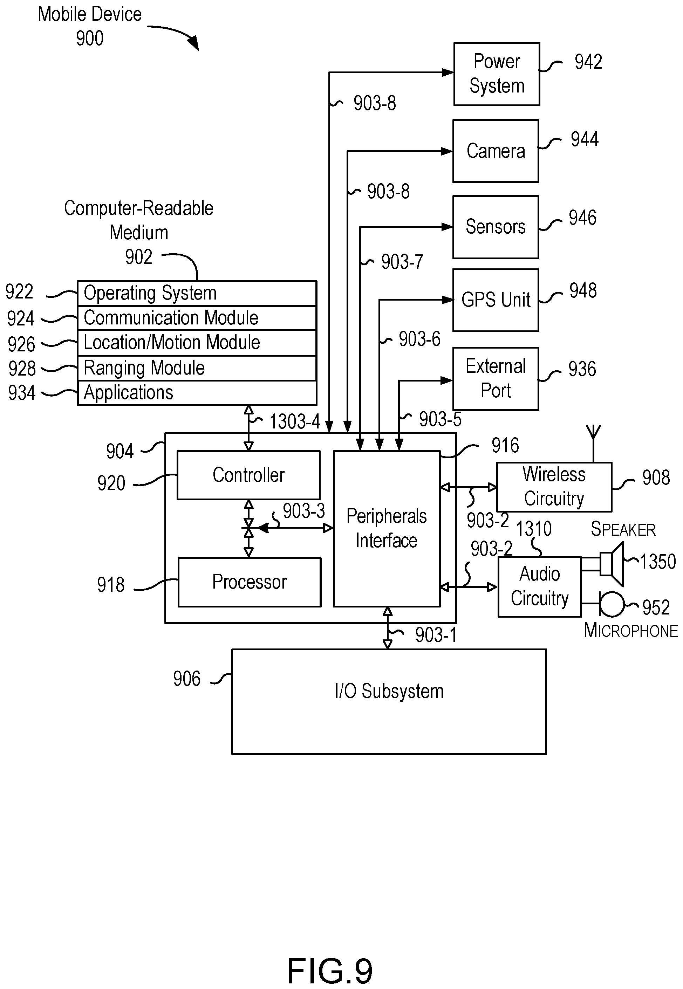

FIG. 9 is a block diagram of an example device 900, which may be a mobile device. Device 900 generally includes computer-readable medium 902, a processing system 904, an Input/Output (I/O) subsystem 906, wireless circuitry 908, and audio circuitry 910 including speaker 950 and microphone 952. These components may be coupled by one or more communication buses or signal lines 903. Device 900 can be any portable mobile device, including a handheld computer, a tablet computer, a mobile phone, laptop computer, tablet device, media player, personal digital assistant (PDA), a key fob, a car key, an access card, a multi-function device, a mobile phone, a portable gaming device, a car display unit, or the like, including a combination of two or more of these items.

It should be apparent that the architecture shown in FIG. 9 is only one example of an architecture for device 900, and that device 900 can have more or fewer components than shown, or a different configuration of components. The various components shown in FIG. 9 can be implemented in hardware, software, or a combination of both hardware and software, including one or more signal processing and/or application specific integrated circuits.

Wireless circuitry 908 is used to send and receive information over a wireless link or network to one or more other devices' conventional circuitry such as an antenna system, an RF transceiver, one or more amplifiers, a tuner, one or more oscillators, a digital signal processor, a CODEC chipset, memory, etc. Wireless circuitry 908 can use various protocols, e.g., as described herein.

Wireless circuitry 908 is coupled to processing system 904 via peripherals interface 916. Interface 916 can include conventional components for establishing and maintaining communication between peripherals and processing system 904. Voice and data information received by wireless circuitry 908 (e.g., in speech recognition or voice command applications) is sent to one or more processors 918 via peripherals interface 916. One or more processors 918 are configurable to process various data formats for one or more application programs 934 stored on medium 902.

Peripherals interface 916 couple the input and output peripherals of the device to processor 918 and computer-readable medium 902. One or more processors 918 communicate with computer-readable medium 902 via a controller 920. Computer-readable medium 902 can be any device or medium that can store code and/or data for use by one or more processors 918. Medium 902 can include a memory hierarchy, including cache, main memory, and secondary memory.

Device 900 also includes a power system 942 for powering the various hardware components. Power system 942 can include a power management system, one or more power sources (e.g., battery, alternating current (AC)), a recharging system, a power failure detection circuit, a power converter or inverter, a power status indicator (e.g., a light emitting diode (LED)), and any other components typically associated with the generation, management and distribution of power in mobile devices.

In some embodiments, device 900 includes a camera 944. In some embodiments, device 900 includes sensors 946. Sensors 946 can include accelerometers, compasses, gyrometers, pressure sensors, audio sensors, light sensors, barometers, and the like. Sensors 946 can be used to sense location aspects, such as auditory or light signatures of a location.

In some embodiments, device 900 can include a GPS receiver, sometimes referred to as a GPS unit 948. A mobile device can use a satellite navigation system, such as the Global Positioning System (GPS), to obtain position information, timing information, altitude, or other navigation information. During operation, the GPS unit can receive signals from GPS satellites orbiting the Earth. The GPS unit analyzes the signals to make a transit time and distance estimation. The GPS unit can determine the current position (current location) of the mobile device. Based on these estimations, the mobile device can determine a location fix, altitude, and/or current speed. A location fix can be geographical coordinates such as latitudinal and longitudinal information. In other embodiments, device 900 may be configured to identify GLONASS signals, or any other similar type of satellite navigational signal.

One or more processors 918 run various software components stored in medium 902 to perform various functions for device 900. In some embodiments, the software components include an operating system 922, a communication module (or set of instructions) 924, a location module (or set of instructions) 926, a triggering event module 928, a predicted app manager module 930, and other applications (or set of instructions) 934, such as a car locator app and a navigation app.

Operating system 922 can be any suitable operating system, including iOS, Mac OS, Darwin, RTXC, LINUX, UNIX, OS X, WINDOWS, or an embedded operating system such as VxWorks. The operating system can include various procedures, sets of instructions, software components and/or drivers for controlling and managing general system tasks (e.g., memory management, storage device control, power management, etc.) and facilitates communication between various hardware and software components.

Communication module 924 facilitates communication with other devices over one or more external ports 936 or via wireless circuitry 908 and includes various software components for handling data received from wireless circuitry 908 and/or external port 936. External port 936 (e.g., USB, FireWire, Lightning connector, 70-pin connector, etc.) is adapted for coupling directly to other devices or indirectly over a network (e.g., the Internet, wireless LAN, etc.).

Location/motion module 926 can assist in determining the current position (e.g., coordinates or other geographic location identifier) and motion of device 900. Modern positioning systems include satellite-based positioning systems, such as Global Positioning System (GPS), cellular network positioning based on "cell IDs," and Wi-Fi positioning technology based on a Wi-Fi networks. GPS also relies on the visibility of multiple satellites to determine a position estimate, which may not be visible (or have weak signals) indoors or in "urban canyons." In some embodiments, location/motion module 926 receives data from GPS unit 948 and analyzes the signals to determine the current position of the mobile device. In some embodiments, location/motion module 926 can determine a current location using Wi-Fi or cellular location technology. For example, the location of the mobile device can be estimated using knowledge of nearby cell sites and/or Wi-Fi access points with knowledge also of their locations. Information identifying the Wi-Fi or cellular transmitter is received at wireless circuitry 908 and is passed to location/motion module 926. In some embodiments, the location module receives the one or more transmitter IDs. In some embodiments, a sequence of transmitter IDs can be compared with a reference database (e.g., Cell ID database, Wi-Fi reference database) that maps or correlates the transmitter IDs to position coordinates of corresponding transmitters, and computes estimated position coordinates for device 900 based on the position coordinates of the corresponding transmitters. Regardless of the specific location technology used, location/motion module 926 receives information from which a location fix can be derived, interprets that information, and returns location information, such as geographic coordinates, latitude/longitude, or other location fix data.

Triggering event module 928 can include various sub-modules or systems, e.g., as described herein with respect to FIG. 2. Furthermore, predicted app manager module 930 can include various sub-modules or systems, e.g., as described herein with respect to FIGs. 4A-4F.

The one or more application programs 934 on the mobile device can include any applications installed on the device 900, including without limitation, a browser, address book, contact list, email, instant messaging, word processing, keyboard emulation, widgets, JAVA-enabled applications, encryption, digital rights management, voice recognition, voice replication, a music player (which plays back recorded music stored in one or more files, such as MP3 or AAC files), etc.

There may be other modules or sets of instructions (not shown), such as a graphics module, a time module, etc. For example, the graphics module can include various conventional software components for rendering, animating, and displaying graphical objects (including without limitation text, web pages, icons, digital images, animations, and the like) on a display surface. In another example, a timer module can be a software timer. The timer module can also be implemented in hardware. The time module can maintain various timers for any number of events.

The I/O subsystem 906 can be coupled to a display system (not shown), which can be a touch-sensitive display. The display system displays visual output to the user in a GUI. The visual output can include text, graphics, video, and any combination thereof. Some or all of the visual output can correspond to user-interface objects. A display can use LED (light emitting diode), LCD (liquid crystal display) technology, or LPD (light emitting polymer display) technology, although other display technologies can be used in other embodiments.

In some embodiments, I/O subsystem 906 can include a display and user input devices such as a keyboard, mouse, and/or track pad. In some embodiments, I/O subsystem 906 can include a touch-sensitive display. A touch-sensitive display can also accept input from the user based on haptic and/or tactile contact. In some embodiments, a touch-sensitive display forms a touch-sensitive surface that accepts user input. The touch-sensitive display/surface (along with any associated modules and/or sets of instructions in medium 902) detects contact (and any movement or release of the contact) on the touch-sensitive display and converts the detected contact into interaction with user-interface objects, such as one or more soft keys, that are displayed on the touch screen when the contact occurs. In some embodiments, a point of contact between the touch-sensitive display and the user corresponds to one or more digits of the user. The user can make contact with the touch-sensitive display using any suitable object or appendage, such as a stylus, pen, finger, and so forth. A touch-sensitive display surface can detect contact and any movement or release thereof using any suitable touch sensitivity technologies, including capacitive, resistive, infrared, and surface acoustic wave technologies, as well as other proximity sensor arrays or other elements for determining one or more points of contact with the touch-sensitive display.

Further, the I/O subsystem can be coupled to one or more other physical control devices (not shown), such as pushbuttons, keys, switches, rocker buttons, dials, slider switches, sticks, LEDs, etc., for controlling or performing various functions, such as power control, speaker volume control, ring tone loudness, keyboard input, scrolling, hold, menu, screen lock, clearing and ending communications and the like. In some embodiments, in addition to the touch screen, device 900 can include a touchpad (not shown) for activating or deactivating particular functions. In some embodiments, the touchpad is a touch-sensitive area of the device that, unlike the touch screen, does not display visual output. The touchpad can be a touch-sensitive surface that is separate from the touch-sensitive display, or an extension of the touch-sensitive surface formed by the touch-sensitive display.

In some embodiments, some or all of the operations described herein can be performed using an application executing on the user's device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission. A suitable non-transitory computer readable medium can include random access memory (RAM), a read only memory (ROM), a magnetic medium such as a hard-drive or a floppy disk, or an optical medium, such as a compact disk (CD) or DVD (digital versatile disk), flash memory, and the like. The computer readable medium may be any combination of such storage or transmission devices.

Computer programs incorporating various features of the present disclosure may be encoded on various computer readable storage media; suitable media include magnetic disk or tape, optical storage media, such as compact disk (CD) or DVD (digital versatile disk), flash memory, and the like. Computer readable storage media encoded with the program code may be packaged with a compatible device or provided separately from other devices. In addition, program code may be encoded and transmitted via wired optical, and/or wireless networks conforming to a variety of protocols, including the Internet, thereby allowing distribution, e.g., via Internet download. Any such computer readable medium may reside on or within a single computer product (e.g., a solid-state drive, a hard drive, a CD, or an entire computer system), and may be present on or within different computer products within a system or network. A computer system may include a monitor, printer, or other suitable display for providing any of the results mentioned herein to a user.

As described above, one aspect of the present technology is the gathering and use of data available from various sources to improve prediction of users that a user may be interested in communicating with. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to predict users that a user may want to communicate with at a certain time and place. Accordingly, use of such personal information data included in contextual information enables people centric prediction of people a user may want to interact with at a certain time and place. Further, other uses for personal information data that benefit the user are also contemplated by the present disclosure. For instance, health and fitness data may be used to provide insights into a user's general wellness or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of people centric prediction services, the present technology can be configured to allow users to select to "opt in" or "opt out" of participation in the collection of personal information data during registration for services or anytime thereafter. In another example, users can select not to provide location information for recipient suggestion services. In yet another example, users can select to not provide precise location information but permit the transfer of location zone information. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, users that a user may want to communicate with at a certain time and place may be predicted based on non-personal information data or a bare minimum amount of personal information, such as the content being requested by the device associated with a user, other non-personal information, or publicly available information.

Although the disclosure has been described with respect to specific embodiments, it will be appreciated that the disclosure is intended to cover all modifications and equivalents within the scope of the following claims.

All patents, patent applications, publications, and descriptions mentioned herein are incorporated by reference in their entirety for all purposes. None is admitted to be prior art. Where a conflict exists between the instant application and a reference provided herein, the instant application shall dominate.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

## Claims

1. A method performed by a processor of a first mobile device, comprising:
initiating a transfer of data between the first mobile device and a second mobile device over a first communication pathway;
monitoring, by a system process of the first mobile device, one or more metrics measured of a device state, a network state, a transfer state, or a combination thereof during the transfer of data;
generating, by the system process, a change recommendation using the one or more metrics, the change recommendation indicating a change from the first communication pathway to a second communication pathway;
providing the change recommendation to connection manager; and
in response to the change recommendation, changing, by the connection manager, the transfer of data from the first communication pathway to the second communication pathway.

2. The method of claim 1, wherein the second communication pathway has a higher bandwidth than the first communication pathway.

3. The method of claim 1, wherein the monitoring comprises:
determining, by a system process of the first mobile device, that a transfer size exceeds a size threshold; and
in response to the transfer size exceeding the threshold, monitoring one or more metrics measured of the devices state, the network state and the transfer state, or a combination thereof during the transfer of data.

4. The method of claim 1, further comprising:
terminating the transfer of data between the first mobile device and the second mobile device;
changing the transfer of data from the second communication pathway to the first communication pathway; and
initiating a change timer, wherein a change from the first communication pathway to the second communication pathway is prevented until a conclusion of the change timer.

5. The method of claim 1, wherein generating the change recommendation comprises:
providing the transfer size, the device state, the network state, and the transfer state as input to a machine learning model;
receiving the change recommendation as output from the machine learning model, wherein the change recommendation is a probability that a change from the first communication pathway to the second communication pathway is successful.

6. The method of claim 5, wherein the one or more criteria comprises one or more probability thresholds.

7. The method of claim 1, wherein the first communication pathway is a Bluetooth connection between the first mobile device and the second mobile device.

8. The method of claim 1, wherein the second communication pathway is a WiFi connection between the first mobile device and the second mobile device.

9. The method of claim 1, wherein the first mobile device is a wearable device.

10. The method of claim 1, wherein the second mobile device is a wearable device.

11. The method of claim 1, wherein initiating the transfer of data over the first communication pathway comprises:
receiving a transfer request from the second mobile device; and
initiating the transfer over the first communication pathway.

12. The method of claim 1, wherein initiating the transfer of data over the first communication pathway comprises:
receiving a transfer request from an application executing on a processor of the first mobile device; and
initiating the transfer over the first communication pathway.

13. The method of claim 1, wherein initiating the transfer of data over the first communication pathway comprises:
receiving a transfer request from the system process of the first mobile device;
and
initiating the transfer over the first communication pathway.

14. The method of claim 1, wherein the device state comprises one or more of a battery capacity, a battery charging rate, and a thermal state.

15. The method of claim 14, wherein monitoring the device state comprises:
requesting the device state from the second mobile device over the first communication pathway, the device state corresponding to the second mobile device; and
receiving the device state from the second mobile device.

16. The method of claim 1, wherein a transfer state comprises one or more of a transfer source and a transfer type.

17. The method of claim 1, wherein the network state of the transfer of data comprises one or more of a throughput, a packet error rate, a signal to noise ratio, a received signal strength indicator, a network congestion, and pathway driver metrics.

18. A mobile device, comprising:
one or more processors;
a memory coupled to the one or more processors, the memory storing instructions that cause the one or more processors to perform any one or more of operations of claims 1-17.

19. A non-transitory, computer readable medium, the non-transitory computer readable medium storing instructions that when executed on one or more processors perform any one of more of operations of claims 1-17.
